# EUROPÄISCHE PATENTSCHRIFT

(11) **EP 2 883 118 B1**
(45) Veröffentlichungstag und Bekanntmachung des Hinweises auf die Patenterteilung: **05.09.2018**
(21) Anmeldenummer: 13741989.1
(22) Anmeldetag: 16.07.2013
(51) Int. Cl.: G06F 1/16, A45C 11/00

(54) **GEHÄUSE**
HOUSING
BOÎTIER

(30) Priorität: 10.08.2012 DE 102012015798
(43) Veröffentlichungstag der Anmeldung: 17.06.2015
(73) Patentinhaber: Leitz ACCO Brands GmbH & Co KG, 70469 Stuttgart (DE)
(72) Erfinder: EISELE, Matthias, 71229 Leonberg (DE); SEIFFARTH, Steffen, 70794 Filderstadt (DE)
(74) Vertreter: Patentanwälte Bregenzer und Reule Partnerschaftsgesellschaft mbB
(86) Internationale Anmeldenummer: PCT/EP2013/064972
(87) Internationale Veröffentlichungsnummer: WO 2014/023527

(56) Entgegenhaltungen:
- US-A- 5 909 315
- US-A1- 2002 158 967
- US-A1- 2006 198 087
- US-A1- 2007 253 065
- US-A1- 2010 238 119
- US-A1- 2012 000 908
- US-A1- 2012 043 235

## Beschreibung

Die Erfindung betrifft ein Gehäuse für ein einen Touchscreen aufweisendes Gerät, insbesondere für einen Tablet-Computer oder für ein Smartphone, gemäß dem Oberbegriff des Anspruchs 1.

Elektronische Kommunikations- und Datenverarbeitungsgeräte, wie beispielsweise Mobiltelefone oder Tablet-Computer, werden zunehmend mit Touchscreens ausgerüstet, welche einfach zu bedienen sind. Aufgrund ihrer geringen Abmessungen und ihres leichten Gewichts können solche Geräte bequem auf Reisen mitgenommen werden, und sie können nahezu an jedem beliebigen Ort benutzt werden, beispielsweise im Zugabteil, in einem Warteraum oder in einem Restaurant. Bei der Benutzung dieser Geräte in der Öffentlichkeit besteht jedoch die Gefahr, dass unbefugte Personen von der Seite auf den Touchscreen schauen und möglicherweise vertrauliche Informationen lesen können. Um dies zu verhindern, wurden Blickschutzfilter entwickelt, die die Form einer flachen Scheibe oder einer Folie aufweisen und mit integrierten dunklen Lamellen versehen sind, die die Sichtbarkeit des Touchscreens auf einen vorgegebenen Winkel um das Einfallslot herum begrenzt. Schaut man senkrecht auf den Touchscreen, so bewirken die Lamellen nur eine geringe Beeinträchtigung der Bildqualität. Je mehr der Blickwinkel vom Einfallslot abweicht, desto stärker wird jedoch die Sichtbarkeit des Touchscreens eingeschränkt, bis er ab einem bestimmten Winkel für den Betrachter unsichtbar ist. Dabei gibt es die Möglichkeit, die Lamellen lediglich in einer Gitterstruktur anzuordnen, so dass die Sichtbarkeit des Touchscreens von zwei Seiten her eingeschränkt ist, oder aber die Lamellen in einer Rasterstruktur anzuordnen, so dass von aus allen vier Blickrichtungen eine Einschränkung der Sichtbarkeit des Touchscreens gegeben ist. Solche Blickschutzfilter werden, wie beispielsweise die von der Firma 3M unter der Marke "VIKUITI" vertriebene Folie, auf den Touchscreen aufgeklebt, so dass sie flächig an ihm anliegen, um die Bedienbarkeit des Touchscreens nicht zu
beeinträchtigen. Desweiteren kann der empfindliche Touchscreen zerkratzt werden, oder er reflektiert Licht in unerwünschter Weise, was durch das Aufkleben einer vorzugsweise kratzfesten Schutzfolie bzw. einer matten Antireflexfolie verhindert wird. Ist eine solche Folie einmal aufgeklebt, so lässt sie sich zwar weitgehend rückstandsfrei wieder abziehen, sie wird dann aber für eine erneute Verwendung unbrauchbar. Somit verbleibt beispielsweise der Blickschutzfilter oder die matte Antireflexfolie ständig auf dem Touchscreen und schränkt dessen Brillanz auch dann ein, wenn er nicht vor fremden Blicken geschützt werden muß bzw. keine störenden Lichtreflexionen zu erwarten sind. Aus der US 2010/0238119 A1, der US 2012/0043235 A1 und der US 2012/0000908 A1 sind jeweils Gehäuse der eingangs genannten Art bekannt, deren Abdeckelement eine Schutz- oder Antireflexfunktion aufweist.

Es ist daher Aufgabe der Erfindung, eine Möglichkeit zu schaffen, ein den Touchscreen bedeckendes Abdeckelement flexibler einsetzen zu können.

Diese Aufgabe wird erfindungsgemäß durch ein Gehäuse mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, das betreffende Gerät, insbesondere einen Tablet-Computer, im Gehäuse anzuordnen, so dass mittels des Deckels das einen Blickschutzfilter aufweisende Abdeckelement auf einfache Weise auf den Touchscreen geklappt bzw. von diesem entfernt werden kann. Wenn das Abdeckelement nicht benötigt wird, beispielsweise wenn nicht zu befürchten ist, dass Unbefugte vertrauliche Informationen vom Touchscreen ablesen, kann der Deckel aufgeklappt werden, so dass dem Benutzer die volle Brillanz der Anzeige des Touchscreens zur Verfügung steht. Wird das Gerät in der Öffentlichkeit benutzt, so kann mit einem einfachen Handgriff der Deckel zugeklappt werden, so dass der Blickschutzfilter auf dem Touchscreen liegt. Dabei wird bevorzugt, dass die Aufnahmekontur von der Oberseite des Aufnahmeteils aus gemessen eine Tiefe aufweist, die der Dicke des aufzunehmenden Geräts entspricht oder geringfügig kleiner ist. Durch diese Maßnahme wird weitgehend sichergestellt, dass
das Abdeckelement flächig auf dem Touchscreen anliegt, so dass dieser ohne Einschränkungen bedient werden kann. Zusätzlich zum Blickschutzfilter kann das Abdeckelement eine matte Antireflexfolie, eine vorzugsweise kratzfeste Schutzfolie oder eine ein Dekor aufweisende Folie aufweisen. Auch eine Ausbildung als Verbundmaterial aus mehreren der vorgenannten Arten von Folien oder Scheiben ist möglich.

Das Abdeckelement kann direkt am Aufnahmeteil angelenkt sein und somit allein den Deckel bilden. Es wird jedoch bevorzugt, dass der Deckel einen am Aufnahmeteil angelenkten Rahmen aufweist, der das Abdeckelement trägt. Der Rahmen verleiht dem Abdeckelement, das in der Regel als dünne Folie vorliegt, eine erhöhte Stabilität. Zweckmäßig weist der Rahmen einen umlaufenden Rand auf, der ein Sichtfenster umrahmt und an dessen dem Aufnahmeteil zugewandter Innenfläche das Abdeckelement anliegend angeordnet ist. Das Abdeckelement kann am umlaufenden Rand aufgeklebt sein oder durch mechanische Mittel am Rahmen befestigt sein. Gemäß einer vorteilhaften Weiterbildung weist der umlaufende Rand eine Breite auf, die im wesentlichen der Breite eines den Touchscreen des aufzunehmenden Geräts umrahmenden Geräterands entspricht. Somit wird die volle Breite des Geräterands, auf den der Benutzer nicht blicken können muß, ausgenutzt, um dem Deckel eine hohe Stabilität zu verleihen.

Der Deckel weist vorteilhaft im Abstand zum mindestens einen Scharnier Befestigungsmittel zum lösbaren Befestigen am Aufnahmeteil auf. Diese Befestigungsmittel können gemäß einer ersten Ausführungsform mindestens ein ferromagnetisches Element aufweisen, das auf ein weiteres ferromagnetisches Element am Aufnahmeteil in der Geschlossen-Stellung eine Anziehungskraft ausübt. Beispielsweise kann im Aufnahmeteil ein Ferromagnet angeordnet sein, der auf ein Weicheisenstück am Deckel eine magnetische Anziehungskraft ausübt, die zum Öffnen des Deckels überwunden werden muß. Der Deckel kann zudem ganz oder teilweise aus Federstahl bestehen. Er kann dann sehr dünn und dennoch stabil ausgeführt werden und ist zudem ferromagnetisch, so dass kein zusätzliches Weicheisenstück erforderlich ist.

Gemäß einer alternativen Ausführungsform sind die Befestigungsmittel mechanischer Art und zum Verbinden mit weiteren mechanischen Befestigungsmitteln am Aufnahmeteil ausgebildet. Dabei kann es sich um Rastverbindungen, Klettverbindungen, Haken oder dergleichen handeln. Die Befestigungsmittel ermöglichen es, den Deckel in der Geschlossen-Stellung so fest mit dem Aufnahmeteil zu verbinden, dass ein unbeabsichtigtes Aufklappen weitestgehend vermieden wird.

Zweckmäßig weist das mindestens eine Scharnier ein Verbindungsteil auf, das bezüglich des Deckels um eine erste Schwenkachse und bezüglich des Aufnahmeteils um eine zweite Schwenkachse verschwenkbar ist. Das Verbindungsteil weist vorteilhaft eine an mindestens drei Seiten umrahmte, zentrale Durchgriffsöffnung auf. Dies hat den Vorteil, dass mittels Durchgreifen durch die Durchgriffsöffnung der in diesem Bereich angeordnete Einschaltknopf eines Samsung-Tablet-Computers betätigt werden kann. Zudem wird bevorzugt, dass das Verbindungsteil einen Grundkörper aus Kunststoff sowie zwei an einander abgewandten Außenflächen des Grundkörpers angeordnete Verstärkungsplatten aus Metall aufweist, durch welche die erste und die zweite Schwenkachse verlaufen. Die Verstärkungsplatten verstärken das Verbindungsteil genau an den Stellen, die erhöhter mechanischer Belastung unterliegen.

Der Abstand zwischen der ersten und der zweiten Schwenkachse entspricht vorteilhaft im wesentlichen der Dicke des Gehäuses. Diese Maßnahme erlaubt ein Umklappen des Deckels von der Oberseite des Aufnahmeteils bis zu einer der Oberseite abgewandten Unterseite des Aufnahmeteils. In der Offen-Stellung kann der Deckel damit an der Unterseite anliegend positioniert werden und ist bei der Handhabung des im Gehäuse aufgenommenen Geräts nicht im Weg bzw. beansprucht nicht zusätzlichen Platz.

Im Folgenden wird die Erfindung anhand eines in der Zeichnung schematisch dargestellten Ausführungsbeispiels näher erläutert. Es zeigen
Fig. 1a bis 1f ein Gehäuse mit aufgenommenem Tablet-Computer in der Geschlossen-Stellung in perspektivischer Ansicht, in Draufsicht, in einem Schnitt entlang der Linie A-A, in einer Detaildarstellung gemäß Ausschnitt X und in einer Detaildarstellung gemäß Ausschnitt Y sowie eine Explosionsdarstellung eines Verbindungsteils eines Scharniers;
Fig. 2 das Gehäuse mit aufgenommenem Tablet-Computer gemäß Fig. 1a bis 1f in teilweise aufgeklapptem Zustand in perspektivischer Ansicht;
Fig. 3 das Gehäuse mit aufgenommenem Tablet-Computer gemäß Fig. 1a bis 1f und Fig. 2 in vollständig aufgeklapptem Zustand und

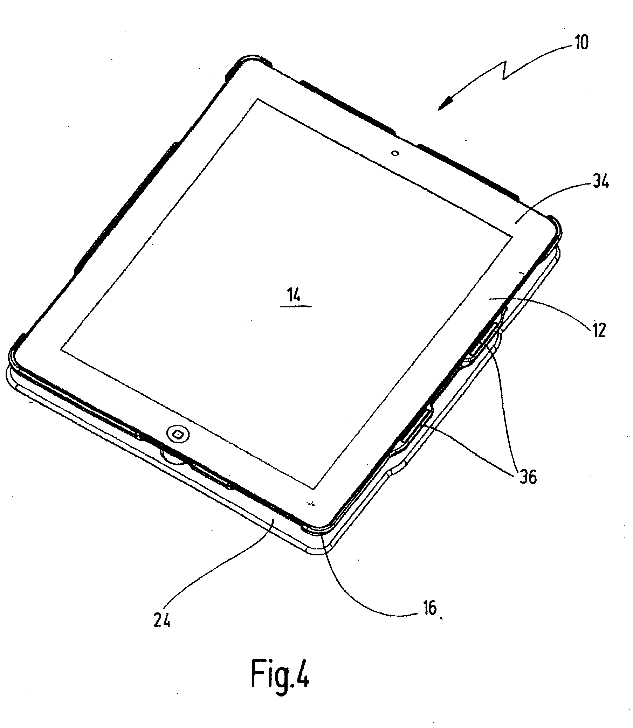

Fig. 4 das Gehäuse mit aufgenommenem Tablet-Computer gemäß Fig. 1a bis 1f, Fig. 2 und Fig. 3 mit um 360° verschwenktem Deckel.

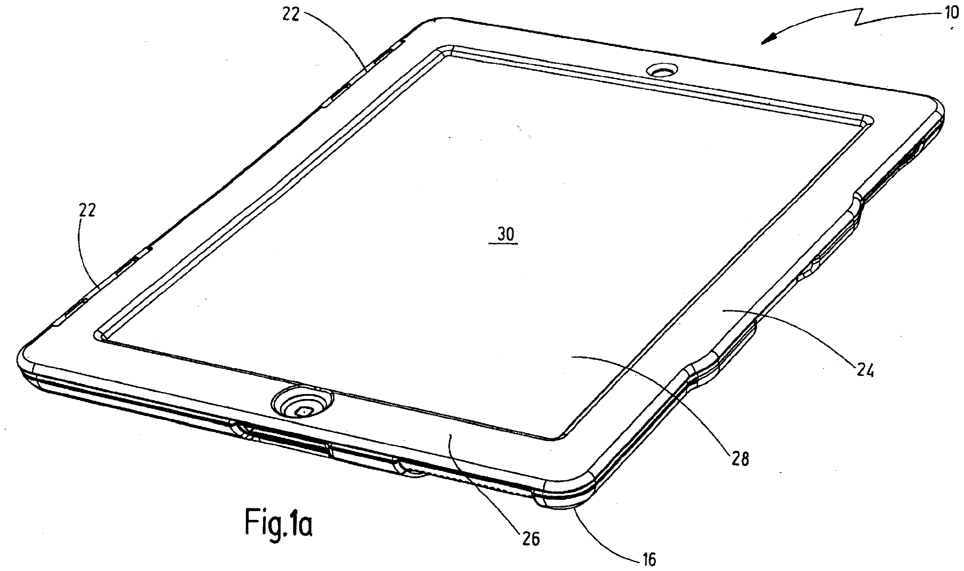

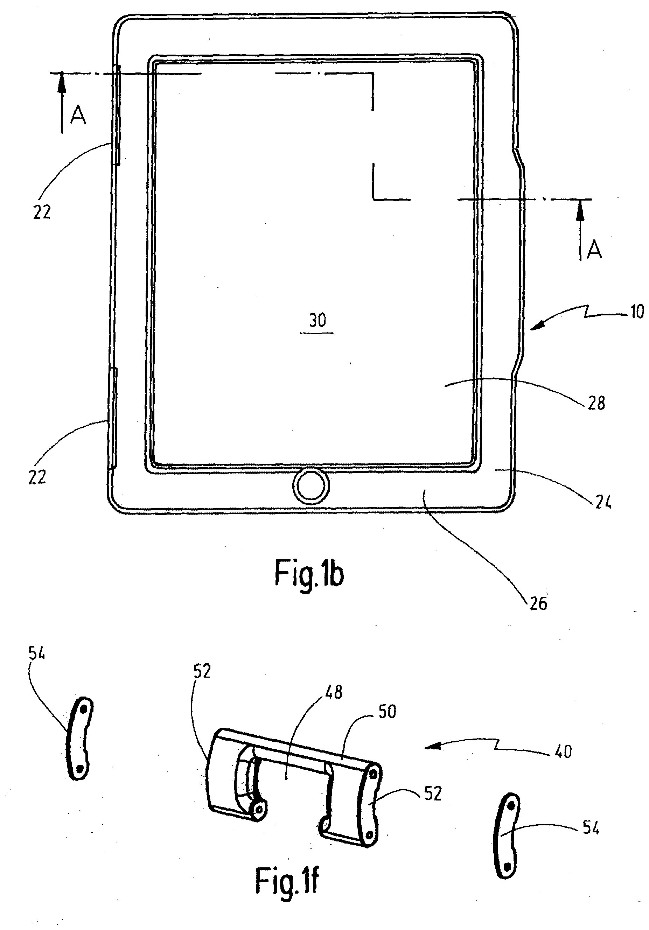

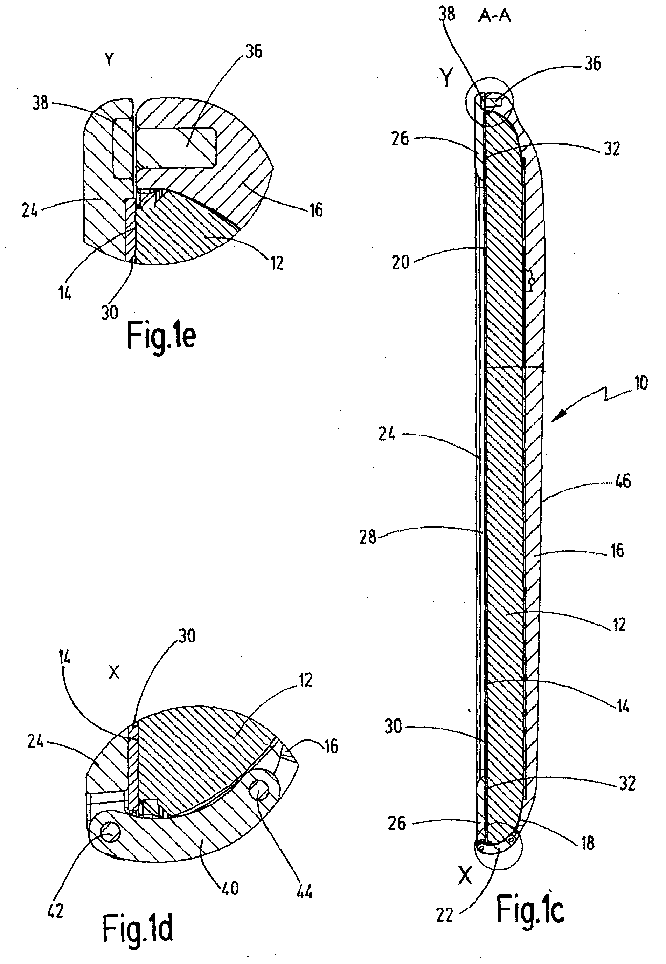

In der Zeichnung ist ein Gehäuse 10 gezeigt, das einen Tablet-Computer 12 aufnimmt, der einen Touchscreen 14 aufweist. Das Gehäuse 10 weist ein Aufnahmeteil 16 auf, das wannenförmig ausgebildet ist und eine Aufnahmekontur 18 aufweist, die an die Außenkontur des Tablet-Computers 12 angepaßt ist, so dass dieser paßgenau mit nur geringem Spiel im Aufnahmeteil 16 aufgenommen ist. Zu einer Oberseite 20 hin ist das Aufnahmeteil 16 offen. Am Aufnahmeteil 16 ist mittels zweier Scharniere 22 ein Deckel 24 angelenkt, der einen Rahmen 26 aufweist, der aus demselben undurchsichtigen Kunststoffmaterial gefertigt ist wie das Aufnahmeteil 16. Der Rahmen 26 bildet einen umlaufenden Rand und umrahmt ein Sichtfenster 28, das in der in Fig. 1a bis 1e dargestellten Geschlossen-Stellung den Blick auf den Touchscreen 14 freigibt. Desweiteren weist der Deckel 24 einen Blickschutzfilter 30 in Form einer Folie auf, der an einer dem Aufnahmeteil 16 zugewandten Innenfläche 32 des Rahmens 26 durch eine Klebeverbindung fest mit dem Rahmen 26 verbunden ist. Der Blickschutzfilter 30 kann zudem im Sichtfenster 28 und/oder auf der dem Touchscreen 14 zugewandten Seite mit einer matten Antireflexfolie, einer kratzfesten Schutzfolie oder einer ein Dekor tragenden Folie beklebt sein.

In der Geschlossen-Stellung, in der der Deckel 24 die Oberseite 20 des Aufnahmeteils 16 überdeckt, ist der Rahmen 26 über einem Geräterand 34 des Tablet-Computers 12 angeordnet, der den Touchscreen 14 umgibt. Den Scharnieren 22 gegenüberliegend sind im Aufnahmeteil 16 zwei Permanentmagnete 36 und im Deckel 24 ein Stück Weicheisen 38 oder ein anderes ferromagnetisches Material angeordnet, wobei das Weicheisenstück 38 von den Permanentmagneten 36 in der Geschlossen-Stellung angezogen wird. Diese magnetische Anziehungskraft verhindert ein unbeabsichtigtes Öffnen durch Abheben des Deckels 24 vom Aufnahmeteil 16. In der Geschlossen-Stellung wird der Blickschutzfilter 30 am Touchscreen 14 anliegend gehalten. Dies wird dadurch erreicht, dass die Aufnahmekontur 18 von der Oberseite 20 ausgehend eine Tiefe aufweist, die in etwa der Dicke des Tablet-Computers 12 entspricht, so dass dieser mit seinem Touchscreen 14 bis zum Blickschutzfilter 30 nach oben ragt, wenn sich das Gehäuse 10 in der Geschlossen-Stellung befindet. Der Touchscreen 14 lässt sich dann durch Berührung des Blickschutzfilters 30 ohne Einschränkung bedienen, kann aber von der Seite ab einem Blickwinkel von ca. 30° gegenüber dem Lot auf dem Blickschutzfilter 30 nicht eingesehen werden.

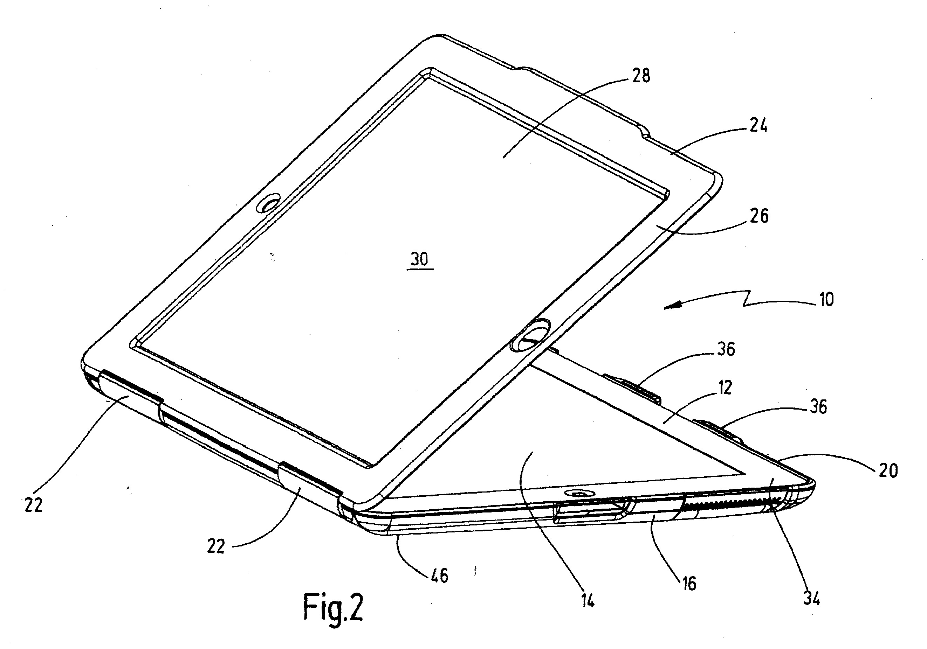

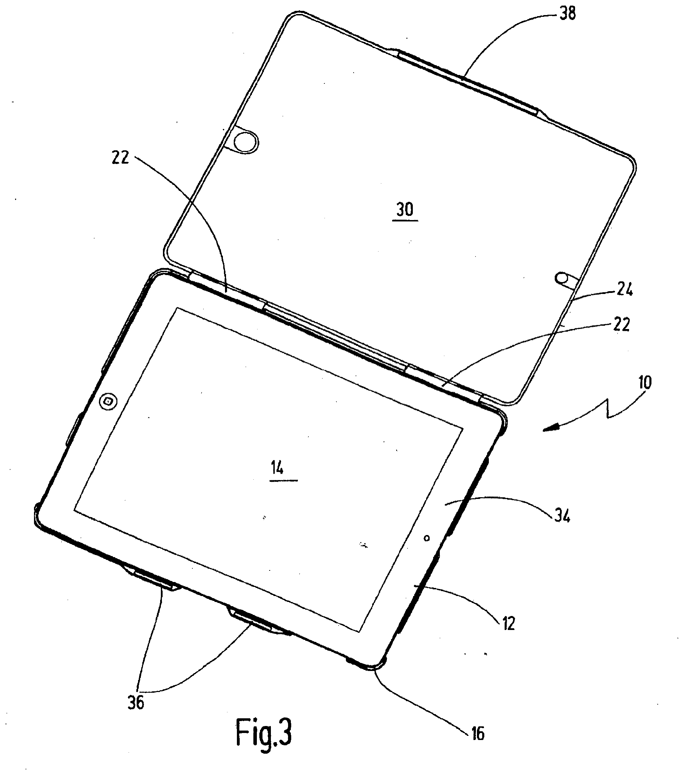

Wird der Blickschutzfilter 30 nicht benötigt, so wird das Gehäuse 10 durch Verschwenken des Deckels 24 gegenüber dem Aufnahmeteil 16 in seine Offen-Stellung gebracht (vgl. Fig. 2, 3). Um den Deckel 24 auf eine der Oberseite 20 abgewandte unterseitige Außenfläche 46 des Aufnahmeteils 16 verschwenken zu können, was in der Zeichnung nicht dargestellt ist, weisen die Scharniere 22 jeweils ein Verbindungsteil 40 auf, das bezüglich des Deckels 24 um eine erste Schwenkachse 42 und bezüglich des Aufnahmeteils 16 um eine zweite Schwenkachse 44 verschwenkbar ist. Der Abstand zwischen der ersten und der zweiten Schwenkachse 42, 44 entspricht dabei ungefähr der Dicke des Gehäuses 10. Im gezeigten Ausführungsbeispiel weist jedes Verbindungsteil 40 einen einstückig aus Kunststoff hergestellten Grundkörper 50 auf, der eine Durchgriffsöffnung 48 an drei Seiten umrandet. An einander abgewandten stirnseitigen Außenflächen 52 des Grundkörpers 50 sind Verstärkungsplatten 54 aus Metall befestigt, durch die die Schwenkachsen 42, 44 verlaufen und die die Stabilität und Verschleißfestigkeit des Verbindungsteils 40 erhöhen.

Zusammenfassend ist folgendes festzuhalten: Die Erfindung betrifft ein Gehäuse 10 für ein einen Touchscreen 14 aufweisendes Gerät, insbesondere für einen Tablet-Computer 12 oder für ein Smartphone, mit einem Aufnahmeteil 16, das eine an die Außenkontur des Geräts 12 angepaßte Aufnahmekontur 18 aufweist, in die das Gerät 12 paßgenau mit dem Touchscreen 14 zu einer Oberseite 20 des Aufnahmeteils 16 weisend einsetzbar ist, und mit einem Deckel 24, der mittels mindestens eines Scharniers 22 mit dem Aufnahmeteil 16 verbunden ist und von einer Geschlossen-Stellung, in der er die Oberseite 20 des Aufnahmeteils 16 überdeckt, in eine Offen-Stellung, in der er von der Oberseite 20 des Aufnahmeteils 16 unter Freigabe des Touchscreens 14 abgehoben ist, verschwenkbar ist, wobei der Deckel 24 ein transparentes Abdeckelement 30 in Form einer Folie oder einer dünnen Scheibe aufweist, das in der Geschlossen-Stellung so zur Aufnahmekontur 18 angeordnet ist, dass es flächig auf dem Touchscreen 14 des in der Aufnahmekontur 18 befindlichen Geräts 12 anliegend gehalten wird, wobei das Abdeckelement einen Blickschutzfilter aufweist und mittels diesem in der Geschlossen-Stellung die Sichtbarkeit des Touchscreens auf einen vorgegebenen Winkelbereich bezüglich des Lots reduziert.

## Patentansprüche

1. Gehäuse für ein einen Touchscreen (14) aufweisendes Gerät, insbesondere für einen Tablet-Computer (12) oder für ein Smartphone, mit einem Aufnahmeteil (16), das eine an die Außenkontur des Geräts (12) angepaßte Aufnahmekontur (18) aufweist, in die das Gerät (12) paßgenau mit dem Touchscreen (14) zu einer Oberseite (20) des Aufnahmeteils (16) weisend einsetzbar ist, und mit einem Deckel (24), der mittels mindestens eines Scharniers (22) mit dem Aufnahmeteil (16) verbunden ist und von einer Geschlossen-Stellung, in der er die Oberseite (20) des Aufnahmeteils (16) überdeckt, in eine Offen-Stellung, in der er von der Oberseite (20) des Aufnahmeteils (16) unter Freigabe des Touchscreens (14) abgehoben ist, verschwenkbar ist, wobei der Deckel (24) ein transparentes Abdeckelement (30) in Form einer Folie oder einer dünnen Scheibe aufweist, das in der Geschlossen-Stellung so zur Aufnahmekontur (18) angeordnet ist, dass es flächig auf dem Touchscreen (14) des in der Aufnahmekontur (18) befindlichen Geräts (12) anliegend gehalten wird, **dadurch gekennzeichnet, dass** das Abdeckelement (30) einen Blickschutzfilter aufweist und mittels diesem in der Geschlossen-Stellung die Sichtbarkeit des Touchscreens (14) auf einen vorgegebenen Winkelbereich bezüglich des Lots reduziert.

2. Gehäuse nach Anspruch 1, **dadurch gekennzeichnet, dass** das Abdeckelement (30) eine Antireflexfolie und/oder eine Schutzfolie zum Schutz des Touchscreens (14) vor mechanischer Einwirkung aufweist.

3. Gehäuse nach Anspruch 1 oder 2, **dadurch gekennzeichnet, dass** der Deckel (24) einen am Aufnahmeteil (16) angelenkten Rahmen (26) aufweist, der das Abdeckelement (30) trägt.

4. Gehäuse nach Anspruch 3, **dadurch gekennzeichnet, dass** der Rahmen (26) einen umlaufenden Rand aufweist, der ein Sichtfenster (28) umrahmt und an dessen dem Aufnahmeteil (16) zugewandter Innenfläche (32) das Abdeckelement (30) anliegend angeordnet ist.

5. Gehäuse nach Anspruch 4, **dadurch gekennzeichnet, dass** der umlaufende Rand eine Breite aufweist, die im wesentlichen der Breite eines den Touchscreen (14) des aufzunehmenden Geräts (12) umrahmenden Geräterands (34) entspricht.

6. Gehäuse nach einem der vorangehenden Ansprüche, **dadurch gekennzeichnet, dass** der Deckel (24) im Abstand zum mindestens einen Scharnier (22) Befestigungsmittel (38) zum lösbaren Befestigen am Aufnahmeteil (16) aufweist.

7. Gehäuse nach Anspruch 6, **dadurch gekennzeichnet, dass** die Befestigungsmittel mindestens ein ferromagnetisches Element (38) aufweisen, das auf ein weiteres ferromagnetisches Element (36) am Aufnahmeteil (16) in der Geschlossen-Stellung eine Anziehungskraft ausübt.

8. Gehäuse nach Anspruch 6, **dadurch gekennzeichnet, dass** die Befestigungsmittel mechanische Befestigungsmittel zum Verbinden mit weiteren mechanischen Befestigungsmitteln am Aufnahmeteil (16) sind.

9. Gehäuse nach einem der vorangehenden Ansprüche, **dadurch gekennzeichnet, dass** der Deckel (24) zumindest teilweise aus Federstahl besteht.

10. Gehäuse nach einem der vorangehenden Ansprüche, **dadurch gekennzeichnet, dass** das mindestens eine Scharnier (22) ein Verbindungsteil (40) aufweist, das bezüglich des Deckels (24) um eine erste Schwenkachse (42) und bezüglich des Aufnahmeteils (16) um eine zweite Schwenkachse (44) verschwenkbar ist.

11. Gehäuse nach Anspruch 10, **dadurch gekennzeichnet, dass** das Verbindungsteil (40) eine an mindestens drei Seiten umrahmte, zentrale Durchgriffsöffnung (48) aufweist.

12. Gehäuse nach Anspruch 10 oder 11, **dadurch gekennzeichnet, dass** das Verbindungsteil (40) einen Grundkörper (50) aus Kunststoff sowie zwei an einander abgewandten Außenflächen (52) des Grundkörpers (50) angeordnete Verstärkungsplatten (54) aus Metall aufweist, durch welche die erste und die zweite Schwenkachse (42, 44) verlaufen.

13. Gehäuse nach einem der Ansprüche 10 bis 12, **dadurch gekennzeichnet, dass** der Abstand zwischen der ersten und der zweiten Schwenkachse (42, 44) im wesentlichen der Dicke des Gehäuses (10) entspricht.

14. Gehäuse nach einem der vorangehenden Ansprüche, **dadurch gekennzeichnet, dass** die Aufnahmekontur (18) von der Oberseite (20) des Aufnahmeteils (16) aus gemessen eine Tiefe aufweist, die der Dicke des aufzunehmenden Geräts (12) entspricht oder geringfügig kleiner ist.

## Claims

1. Housing for a device having a touch screen (14), particularly for a tablet computer (12) or for a smartphone, having a receiving part (16) that has a receiving contour (18) adapted to the outer contour of the device (12), into which the device (12) can be set with precise fit, with the touch screen (14) facing a top side (20) of the receiving part (16), and having a lid (24) that is connected with the receiving part (16) by means of at least one hinge (22) and can be pivoted from a closed position, in which it covers the top side (20) of the receiving part (16), into an open position in which it is lifted off from the top side (20) of the receiving part (16), exposing the touch screen (14), wherein the lid (24) has a transparent covering element (30) in the form of a film or a thin pane, which is disposed, in the closed position, in such a manner relative to the receiving contour (18) that it is held to lie against the touch screen (14) of the device (12) situated in the receiving contour (18) over its full area, **characterized in that** the covering element (30) has a privacy filter and reduces the visibility of the touch screen (14) to a predetermined angle range with reference to the plumb line, by means of this filter, in the closed position.

2. Housing according to claim 1, **characterized in that** the covering element (30) has an anti-reflection film and/or a protective film for protecting the touch screen (14) against mechanical influences.

3. Housing according to claim 1 or 2, **characterized in that** the lid (24) has a frame (26) articulated onto the receiving part (16), which frame carries the covering element (30).

4. Housing according to claim 3, **characterized in that** the frame (26) has a circumferential edge that frames a viewing window (28), and against the inside surface (32) of which frame, facing the receiving part (16), the covering element (30) is disposed to lie.

5. Housing according to claim 4, **characterized in that** the circumferential edge has a width that essentially corresponds to the width of a device edge (34) that frames the touch screen (14) of the device (12) to be accommodated.

6. Housing according to one of the preceding claims, **characterized in that** the lid (24) has attachment means (38) for releasable attachment to the receiving part (16), at a distance from the at least one hinge (22).

7. Housing according to claim 6, **characterized in that** the attachment means have at least one ferromagnetic element (38) that exerts an attraction force on a further ferromagnetic element (36) on the receiving part (16) in the closed position.

8. Housing according to claim 6, **characterized in that** the attachment means are mechanical attachment means for connecting with further mechanical attachment means on the receiving part (16).

9. Housing according to one of the preceding claims, **characterized in that** the lid (24) consists, at least in part, of spring steel.

10. Housing according to one of the preceding claims, **characterized in that** the at least one hinge (22) has a connection part (40) that can be pivoted about a first pivot axis (42) with reference to the lid (24) and about a second pivot axis (44) with reference to the receiving part (16) .

11. Housing according to claim 10, **characterized in that** the connection part (40) has a central access opening (48) framed on at least three sides.

12. Housing according to claim 10 or 11, **characterized in that** the connection part (40) has a base body (50) composed of plastic as well as two reinforcement plates (54) disposed on two outer surfaces (52) of the base body (50) that face away from one another, composed of metal, through which the first and the second pivot axis (42, 44) run.

13. Housing according to one of claims 10 to 12, **characterized in that** the distance between the first and the second pivot axis (42, 44) essentially corresponds to the thickness of the housing (10).

14. Housing according to one of the preceding claims, **characterized in that** the receiving contour (18) has a depth, measured from the top (20) of the receiving part (16), that corresponds to the thickness of the device (12) to be accommodated or is slightly smaller.

## Revendications

1. Boîtier destiné à un appareil muni d'un écran tactile (14), en particulier à une tablette numérique (12) ou à un ordiphone, comprenant une partie réceptrice (16) dotée d'un profil de réception (18) adapté au profil extérieur de l'appareil (12), et dans lequel ledit appareil (12) peut être inséré avec ajustement précis à l'écran tactile (14), en pointant vers une face supérieure (20) de ladite partie réceptrice (16) ; et un couvercle (24) qui est relié à ladite partie réceptrice (16) à l'aide d'au moins une charnière (22) et peut pivoter d'une position fermée, dans laquelle il recouvre ladite face supérieure (20) de la partie réceptrice (16), à une position ouverte dans laquelle il est soulevé à l'écart de ladite face supérieure (20) de ladite partie réceptrice (16), en libérant ledit écran tactile (14), sachant que ledit couvercle (24) comporte un élément transparent de recouvrement (30) revêtant la forme d'un film ou d'un feuil mince occupant par rapport au profil de réception (18), dans la position fermée, un emplacement tel qu'il soit retenu, avec contact à plat, sur l'écran tactile (14) de l'appareil (12) intégré dans ledit profil de réception (18), **caractérisé par le fait que** l'élément de recouvrement (30) présente un filtre de confidentialité au moyen duquel, dans la position fermée, il réduit la visibilité de l'écran tactile (14) à une plage angulaire préétablie par rapport à la perpendiculaire incidente.

2. Boîtier selon la revendication 1, **caractérisé par le fait que** l'élément de recouvrement (30) est pourvu d'un film antireflets et/ou d'un film protecteur réalisé pour protéger l'écran tactile (14) d'une action mécanique.

3. Boîtier selon la revendication 1 ou 2, **caractérisé par le fait que** le couvercle (24) comporte un cadre (26) articulé sur la partie réceptrice (16) et portant l'élément de recouvrement (30).

4. Boîtier selon la revendication 3, **caractérisé par le fait que** le cadre (26) comporte un bord périphérique qui encadre une fenêtre d'observation (28), l'élément de recouvrement (30) étant placé en applique contre la face intérieure (32) dudit bord qui est tournée vers la partie réceptrice (16).

5. Boîtier selon la revendication 4, **caractérisé par le fait que** le bord périphérique présente une largeur correspondant, pour l'essentiel, à la largeur d'une bordure (34) de l'appareil qui encadre l'écran tactile (14) dudit appareil (12) devant être intégré.

6. Boîtier selon l'une des revendications précédentes, **caractérisé par le fait que** le couvercle (24) est pourvu, à distance de la charnière (22) à présence minimale, de moyens de fixation (38) affectés à la fixation libérable à la partie réceptrice (16).

7. Boîtier selon la revendication 6, **caractérisé par le fait que** les moyens de fixation comportent au moins un élément ferromagnétique (38) appliquant, dans la position fermée, une force d'attraction à un autre élément ferromagnétique (36) sur la partie réceptrice (16).

8. Boîtier selon la revendication 6, **caractérisé par le fait que** les moyens de fixation sont des moyens de fixation mécaniques dévolus à la liaison avec d'autres moyens de fixation mécaniques, sur la partie réceptrice (16).

9. Boîtier selon l'une des revendications précédentes, **caractérisé par le fait que** le couvercle (24) consiste, au moins partiellement, en de l'acier à ressorts.

10. Boîtier selon l'une des revendications précédentes, **caractérisé par le fait que** la charnière (22), à présence minimale, est munie d'une partie de liaison (40) pouvant pivoter autour d'un premier axe de pivotement (42), par rapport au couvercle (24), et autour d'un second axe de pivotement (44) par rapport à la partie réceptrice (16).

11. Boîtier selon la revendication 10, **caractérisé par le fait que** la partie de liaison (40) comporte une ouverture centrale de passage (48) encadrée sur au moins trois côtés.

12. Boîtier selon la revendication 10 ou 11, **caractérisé par le fait que** la partie de liaison (40) comprend un corps de base (50) en matière plastique, ainsi que deux plaquettes métalliques de renfort (54) qui sont disposées sur des faces extérieures (52) dudit corps de base (50) pointant à l'opposé l'une de l'autre, et qui sont traversées par les premier et second axes de pivotement (42, 44).

13. Boîtier selon l'une des revendications 10 à 12, **caractérisé par le fait que** la distance, entre les premier et second axes de pivotement (42, 44), correspond pour l'essentiel à l'épaisseur dudit boîtier (10).

14. Boîtier selon l'une des revendications précédentes, **caractérisé par le fait que** le profil de réception (18) présente, mesuré à partir de la face supérieure (20) de la partie réceptrice (16), une profondeur qui correspond à l'épaisseur de l'appareil (12) devant être intégré, ou est légèrement inférieure à cette dernière.
